# FASCICULE DE BREVET EUROPEEN

(11) **EP 2 823 319 B1**
(45) Date de publication et mention de la délivrance du brevet: **21.10.2020**
(21) Numéro de dépôt: 13715282.3
(22) Date de dépôt: 08.03.2013
(51) Int. Cl.: G01N 35/00, G01N 35/10

(54) **PROCÉDÉ D'ANALYSE MÉDICALE**
MEDIZINISCHES ANALYSEVERFAHREN
MEDICAL ANALYSIS METHOD

(30) Priorité: 08.03.2012 FR 1252116
(43) Date de publication de la demande: 14.01.2015
(73) Titulaire: Diamed GmbH, 1785 Cressier (FR) (CH); Bio-Rad Europe GmbH, 4051 Basel (CH)
(72) Inventeur: BRISEBRAT, Jean-Michel, 42460 Villers (FR); BERNAY, Sébastien, 42670 Ecoche (FR); GAGNEPAIN, Cédric, 42153 Riorges (FR); SEYDOUX, Daniel, 78320 Le Mesnil Saint Denis (FR)
(74) Mandataire: Cabinet Beau de Loménie
(86) Numéro de dépôt international: PCT/FR2013/050489
(87) Numéro de publication internationale: WO 2013/132195

(56) Documents cités:
- EP-A1- 0 553 539
- EP-A2- 2 458 387
- WO-A1-03/061830
- WO-A1-2006/075201
- US-A1- 2005 158 212
- US-A1- 2008 206 855
- US-A1- 2009 240 370

## Description

La présente invention concerne le domaine de l'analyse médicale.

Elle concerne plus particulièrement un procédé d'analyse médicale.

Dans le présent exposé, on entend par "analyse médicale" un processus consistant à traiter au moins un échantillon issu d'un être humain ou d'un animal. De tels échantillons sont par exemple des prélèvements de fluides corporels (sang, urine, lymphe, salive, etc.), de cellules, de tissus biologiques ou d'organe.

Des exemples d'analyses médicales sont les analyses en immuno-hématologie telles que les tests de groupage sanguin, des tests de recherche d'anticorps tels que des agglutinines irrégulières, ou des tests de détermination d'une compatibilité entre un donneur et un receveur (épreuve croisée).

Le présent exposé concerne, plus particulièrement, un procédé d'analyse médicale in vitro.

Actuellement, les procédés d'analyse médicale sont réalisées au moyen d'appareils, également appelé automates d'analyse, qui permettent d'automatiser certaines opérations qui seraient sinon traitées manuellement par un ou plusieurs utilisateur(s) au sein de laboratoires d'analyses médicales, par exemple le chargement dans une centrifugeuse de récipients d'analyses contenant des échantillons sanguins ou tout autre prélèvement.

De tels automates, utilisés dans les procédés d'analyse médicale, sont par exemple connus des documents US 6162399, JP 2010054232 et EP 2145685. Ces automates utilisent tous des robots de type cartésien.

Ces automates, utilisant des robots cartésiens, se limitent donc généralement à la gestion d'un nombre limité de stations de traitement particulier.

Leurs dimensions augmentent donc inévitablement dès lors que l'on souhaite multiplier le nombre de leurs postes de travail. Or, la surface disponible pour installer les automates est de plus en plus restreinte du fait de la densification des services au sein des laboratoires d'analyses existants.

Par ailleurs, les robots de type cartésien ont pour particularité de simplifier la modélisation de l'espace de travail en ne tenant compte que de la position des objets dans l'espace, indépendamment de leur orientation. Le caractère réducteur de cette approche suppose que l'orientation des objets à gérer soit connue par avance, figée, et reproductible sur une quantité importante d'automates produits en série. Le montage de l'automate doit donc se faire avec un degré de précision élevé.

Les documents US2002206855 et US2005158212 décrivent des procédés d'analyse médicale utilisant un robot poly-articulé à six axes de rotation. Ils ne décrivent, ni ne suggèrent, l'extraction d'un échantillon à traiter d'un réceptacle de stockage, et son introduction dans un récipient à l'aide dudit robot poly-articulé. L'objectif de la présente invention est de fournir un procédé d'analyse médicale dans lequel les gestes répétitifs des utilisateurs, consommateurs de temps et sources d'erreurs, sont automatisés au maximum, en ne nécessitant qu'un espace de travail limité.

Cet objectif est atteint avec un procédé d'analyse médicale selon la revendication 1.

Dans le présent exposé, on entend par station de traitement toute station dans laquelle le récipient, et plus particulièrement l'échantillon qu'il contient, est traité. Par traitement, on entend généralement toute action destinée à visualiser ou contrôler le récipient, ou à y introduire une substance, notamment un réactif, ou encore à modifier les propriétés physiques (température, homogénéité, etc.) du contenu du récipient.

Au cours de l'étape de traitement, le récipient peut ainsi par exemple être amené dans une zone de pipetage pour qu'y soit introduit un réactif, dans un incubateur pour être incubé, dans une centrifugeuse pour être centrifugé, etc.

Par ailleurs, dans le présent exposé, une station de capture d'images doit être entendue comme tout dispositif permettant une prise d'image, telle qu'une image photographique par exemple, du récipient, et notamment de l'échantillon traité. La station de capture d'images des résultats de traitement peut notamment comprendre une caméra pour la capture des images.

Enfin, l'interface utilisateur doit être entendue comme tout dispositif avec lequel un opérateur peut interagir et qui comprend un organe d'affichage tel qu'un écran. L'interface utilisateur peut ne pas faire partie de l'automate d'analyse médicale. Les images du récipient traité capturées par la station de capture d'images sont envoyées vers l'interface utilisateur pour permettre la visualisation du récipient, et en particulier de l'échantillon, ou des résultats de réaction qui ont été interprétés par un logiciel sur la base des images capturées.

Selon un mode de mise en oeuvre de l'invention, le traitement de l'échantillon comprend l'introduction dans le récipient d'un réactif adapté à réagir avec l'échantillon à traiter.

Lorsque le réactif est introduit dans le récipient et qu'il est mis en contact et éventuellement mélangé avec l'échantillon à traiter, une réaction se produit entre l'échantillon et le réactif, ladite réaction pouvant être positive ou négative.

La station de capture d'images capture alors des images des résultats de la réaction réalisée dans le récipient entre l'échantillon à traiter et le réactif introduit dans le récipient. Les images capturées peuvent donc être témoins d'une réaction dite "positive" ou d'une réaction dite "négative". Ces images capturées ou des résultats découlant de l'interprétation de ces images par un logiciel sont, comme précédemment, affichées sur le dispositif d'affichage de l'interface utilisateur. En particulier, ces images capturées ou les résultats de réaction découlant de l'interprétation de ces images par un logiciel peuvent être témoins du degré de réaction entre l'échantillon et le réactif.

Dans certains modes de mise en oeuvre, des étapes sont réalisées, à l'aide du robot poly-articulé, en amont des étapes de fourniture et de traitement du récipient contenant l'échantillon. Selon l'invention, le procédé comprend une étape préalable au cours de laquelle l'échantillon est extrait d'un réceptacle de stockage, notamment un tube, et introduit dans le récipient, à l'aide du robot poly-articulé.

Le procédé peut également comprendre des étapes de traitement du récipient avant que n'y soit introduit l'échantillon, notamment l'identification du récipient par la visualisation d'un identifiant dudit récipient, tel qu'un code barre imprimé par exemple, la capture des dimensions du récipient, etc.

Dans certains modes de mise en œuvre, le procédé comprend une étape d'analyse, notamment automatique, des résultats de traitement affichés. Le procédé peut notamment comprendre une étape d'interprétation destinée à fournir une information, notamment sur l'état physiologique ou pathologique d'une personne ou sur une anomalie congénitale.

Par exemple, la station de capture d'images des résultats de traitement de l'échantillon peut être couplée à un logiciel adapté à l'analyse des résultats de traitement. Un tel logiciel peut notamment être installé sur un ordinateur de l'interface utilisateur.

Pour le cas où l'étape de traitement de l'échantillon comprend l'introduction d'un réactif dans le récipient, l'analyse des résultats de réaction, par le logiciel par exemple, peut notamment permettre de conclure de manière automatique quant à la positivité ou la négativité de la réaction.

Le procédé d'analyse médicale selon l'invention trouve particulièrement son application dans l'immuno-hématologie, par exemple dans les tests de groupage sanguin, de recherche d'anticorps tels que des agglutinines irrégulières ou de détermination d'une compatibilité entre un donneur et un receveur.

D'autres domaines dans lesquels le procédé selon l'invention peut être appliqué sont la virologie, la microbiologie, la bactériologie, la mycologie, la parasitologie, le contrôle de qualité pour le laboratoire de diagnostic in vitro, la détection des maladies auto-immunes, la surveillance du diabète, la détection de maladies génétiques, la toxicologie et la surveillance d'un état physiologique ou pathologique notamment suite à un traitement thérapeutique.

De préférence, on utilise dans le procédé selon l'invention un robot poly-articulé arrimé à un socle fixe et qui comprend exclusivement des articulations rotoïdes.

Le récipient saisi et déplacé par le robot poly-articulé peut par exemple être une carte gel. Typiquement, une carte gel est un récipient comportant un corps dans lequel sont formés plusieurs puits réactionnels adjacents disposés selon une rangée unique et obturés par un opercule. Les puits de la carte gel contiennent généralement un gel servant à l'interprétation des résultats de réaction intervenus dans les puits. Par exemple, le corps de la carte gel est en plastique. En outre, en général, une carte gel comprend 6 à 8 puits. On comprend alors que l'échantillon à tester est introduit dans au moins un puits d'une telle carte gel.

Dans les cas où un réactif doit interagir avec l'échantillon à traiter, le réactif peut être introduit dans au moins un puits de la carte gel. Le réactif peut être par exemple une suspension d'hématies test dispensée dans le récipient comprenant un plasma à tester ou un sérum test dispensé dans le récipient contenant une suspension d'hématies à tester.

Selon un mode de mise en œuvre du procédé selon l'invention, on amène le récipient jusqu'à la station de capture d'image des résultats de traitement au moyen du robot poly-articulé.

Dans ce cas, la station de capture d'images des résultats de traitement est intégrée à l'automate d'analyse médicale. On comprend que ces images capturées sont ensuite envoyées vers l'interface utilisateur pour l'affichage de ces images.

Selon un mode de mise en œuvre, préalablement à l'étape d'affichage des résultats de traitement, le récipient ou tout autre réceptacle est amené à l'aide du robot poly-articulé jusqu'à une station de contrôle reliée à l'interface utilisateur.

Dans le présent exposé, une station de contrôle doit être entendue comme tout dispositif permettant une capture d'images destinées à permettre un contrôle du récipient et faisant partie de l'automate d'analyse médicale.

Par contrôle, on entend par exemple l'identification du récipient, notamment d'un identifiant du récipient, tel qu' un code barre imprimé sur ce dernier par exemple, le contrôle du niveau des liquides dans le récipient, la capture des dimensions du récipient, notamment sa hauteur et son diamètre, le contrôle de l'état des air-gap c'est-à-dire des bulles d'air isolant le ou les liquide(s) dispensés dans le récipient, ou encore le contrôle de la qualité du contenu du récipient, notamment d'un gel. La station de contrôle peut aussi capturer des images d'objets manipulés par le robot poly-articulé, autres que le récipient. Par exemple, elle peut permettre de déterminer un niveau de liquide dans un flacon de réactif.

Dans certains modes de mise en œuvre, la station de capture d'images des résultats de traitement et la station de contrôle sont une seule et même station, reliée à l'interface utilisateur pour l'affichage des résultats de traitement, c'est-à-dire des images capturées ou des résultats découlant de l'interprétation de ces images par un logiciel.

Selon un exemple, la station de contrôle comprend une caméra. Les images de contrôle capturées sont ensuite affichées sur l'interface utilisateur ou un message relatif à ces images est affiché sur l'interface utilisateur.

Dans certains modes de mise en œuvre, on amène le récipient à l'aide du robot poly-articulé jusqu'à une centrifugeuse de l'automate d'analyse médicale.

Dans certains modes de mise en œuvre, on amène le récipient à l'aide du robot poly-articulé jusqu'à un incubateur de l'automate d'analyse médicale.

Dans certains modes de mise en œuvre, on déplace le récipient à l'aide du robot poly-articulé vers une zone de pipetage du récipient de l'automate d'analyse médicale pour y introduire un réactif.

Dans certains modes de mise en œuvre, l'organe de saisie du robot poly-articulé est utilisé pour saisir un flacon de réactif.

Dans certains modes de mise en œuvre, le flacon de réactif est déplacé à l'aide du robot vers une zone de pipetage du réactif.

Dans certains modes de mise en œuvre, le flacon de réactif peut être retourné et/ou agité à l'aide du robot poly-articulé pour le remettre en suspension.

Dans certains modes de mise en œuvre, le robot poly-articulé ajuste la netteté d'une caméra de la station de contrôle et/ou de la station de capture d'images des résultats de traitement.

Dans certains modes de mise en œuvre, le robot poly-articulé fait pivoter le récipient d'un angle de 180°, afin d'effectuer une prise de vue de chaque face du récipient.

Dans certains modes de mise en œuvre, l'automate comprend une pluralité de stations de traitement qui sont réparties à 360° autour du robot poly-articulé.

Dans certains modes de mise en œuvre, le robot poly-articulé a accès à chaque station de traitement de l'automate.

Dans certains modes de mise en œuvre, on déplace le récipient à l'aide du robot poly-articulé jusqu'à un récipient de collecte destiné à la récupération des déchets.

Dans certains modes de mise en œuvre, le procédé comprend une étape de paramétrage préalable au cours de laquelle des zones où le robot poly-articulé est autorisé à se déplacer et des zones où le robot ne peut pénétrer sont prédéfinies, notamment afin d'interdire le survol de certaines zones de l'automate d'analyse médicale. Cette fonctionnalité est particulièrement importante pour la réduction des risques de contamination croisée lors de la manipulation des différents échantillons, diluants, et/ou réactifs.

Dans certains modes de mise en œuvre, l'organe terminal du robot comprend un palpeur piézo-électrique.

Dans certains modes de mise en œuvre, l'échantillon comprend l'une des substances parmi un fluide, une cellule, un tissu biologique ou d'organe issu d'un être humain ou d'un animal.

Dans un mode particulier de mise en œuvre, le procédé comprend les étapes suivantes :
- on amène le récipient préalablement rempli de l'échantillon à traiter à l'aide du robot poly-articulé vers une zone de pipetage dudit récipient pour y introduire un réactif,
- on introduit le réactif dans le récipient,
- on amène le récipient à l'aide du robot poly-articulé vers un incubateur,
- on incube le récipient,
- on amène le récipient à l'aide du robot poly-articulé de l'incubateur vers une centrifugeuse,
- on centrifuge le récipient,
- on transfère le récipient vers la station de capture d'images des réactions de traitement et on affiche les résultats par l'interface utilisateur.

Dans certains modes de mise en œuvre, avant l'étape d'introduction du réactif dans le récipient, on retourne et/ou on agite le flacon de réactif à l'aide du robot poly-articulé, ce par quoi le réactif est remis en suspension.

Dans certains modes de mise en œuvre, au préalable de l'étape de centrifugation, on transfère le récipient à l'aide du robot poly-articulé vers la station de contrôle pour vérifier les air-gap.

Dans certains modes de mise en œuvre, le robot poly-articulé est utilisé pour actionner un élément de l'automate d'analyse médicale.

Dans certains modes de mise en œuvre, l'orientation du robot poly-articulé est contrôlée en fonction de la nature de l'objet à déplacer, notamment pour éviter les débordements ou l'agitation du liquide dans le cas où le robot déplace un contenant rempli de liquide.

Dans certains modes de mise en œuvre, la vitesse du robot poly-articulé est contrôlée en fonction de la nature de l'objet à déplacer, notamment pour éviter les débordements ou l'agitation du liquide dans le cas où le robot déplace un contenant rempli de liquide.

Dans certains modes de mise en œuvre, la force appliquée par l'organe de saisie sur l'objet à déplacer est mesurée.

Dans certains modes de mise en œuvre, le robot poly-articulé est utilisé pour agiter un objet (par exemple un récipient à diluant), notamment pour remettre en suspension ou mélanger le liquide dans le cas où l'objet est un contenant rempli de liquide. Ne constituant pas un exemple faisant parti de la présente invention, la présente divulgation concerne également un automate d'analyse médicale pouvant être utilisé pour la mise en œuvre du procédé défini ci-dessus, notamment un automate d'analyse médicale in vitro, en immuno-hématologie par exemple, comprenant un robot poly-articulé comprenant des articulations définissant au moins six axes de rotation et adapté pour déplacer et/ou orienter un organe terminal suivant six degrés de liberté.

L'automate d'analyse médicale comprend, outre un tel robot poly-articulé, des organes de stockage et/ou d'analyse, permettant notamment le stockage de récipients (tubes échantillons, récipient à diluant, récipient de réactif, etc.) et/ou la capture d'images, notamment de résultat de traitement.

Le robot utilisé est poly-articulé à l'image d'un bras humain, et comprend six degrés de liberté (trois degrés de liberté pour le déplacement et trois degrés de liberté pour l'orientation), permettant de déplacer et d'orienter l'extrémité distale du bras ou organe terminal, dans un espace de travail donné.

Il couvre ainsi une zone de travail (c'est-à-dire une zone d'évolution de l'organe terminal) qui peut être approximativement symbolisée par une sphère, le robot étant placé au centre de cette sphère. Grâce aux six degrés de liberté de l'organe terminal, non seulement la position réelle des éléments constitutifs de l'automate et des réceptacles gérés par celui-ci peut être prise en compte, mais encore leur orientation dans l'espace. L'organe terminal du robot peut donc atteindre des postes de travail situés à n'importe quel endroit autour de la base du robot, dans toutes les directions de l'espace.

La compacité de l'espace de travail de l'automate peut ainsi être accrue, les postes de travail pouvant être plus rapprochés les uns des autres.

Moyennant un apprentissage préalable de l'espace de travail et la mémorisation des coordonnées réelles dans l'espace de chaque objet, le robot poly-articulé dispose d'une image fidèle, non virtuelle, de l'automate, permettant de compenser les défauts de géométrie dus aux imprécisions de construction.

Dans un mode de réalisation préféré le robot poly-articulé est arrimé à un socle fixe et comprend exclusivement des articulations rotoïdes. Ainsi, les déplacements du robot sont assurés exclusivement par des articulations pivot.

Dans certains modes de mise en œuvre, un récipient est déplacé à l'aide du robot poly-articulé jusqu'à un magasin de sortie des récipients. Cette manipulation est notamment utile lorsque l'on désire récupérer le récipient pour le contrôler ou bien pour le réutiliser ultérieurement (par exemple lorsque le récipient est une carte gel et que tous les puits de ladite carte gel n'ont pas été traités).

Plusieurs modes de réalisation ou de mise en œuvre sont décrits dans le présent exposé. Toutefois, sauf précision contraire, les caractéristiques décrites en relation avec un mode quelconque peuvent être appliquées à un autre mode de réalisation ou de mise en œuvre.

D'autres caractéristiques et avantages de l'invention ressortiront à la lecture de la description suivante d'exemples de réalisation de l'invention donnés à titre illustratif et non limitatif. Cette description fait référence aux feuilles de dessins annexées sur lesquelles :
- La figure 1 est une vue en perspective d'un exemple d'automate apte au traitement d'échantillons cliniques pour des analyses en immuno-hématologie ;
- Les figures 2 et 3 sont des vues respectivement en perspective et de devant du robot poly-articulé de la figure 1 ;

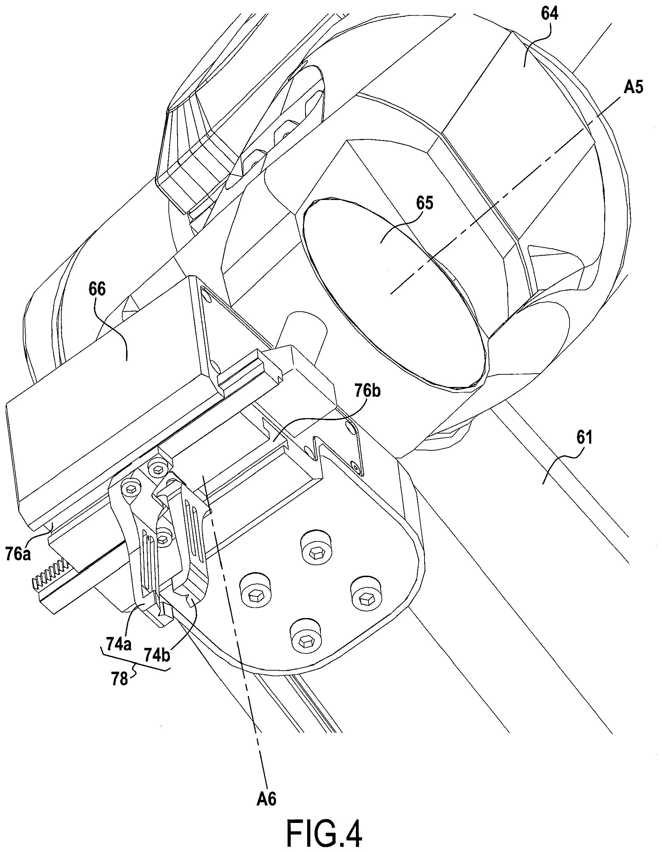

- La figure 4 montre plus en détail l'organe terminal du robot poly-articulé de la figure 1.

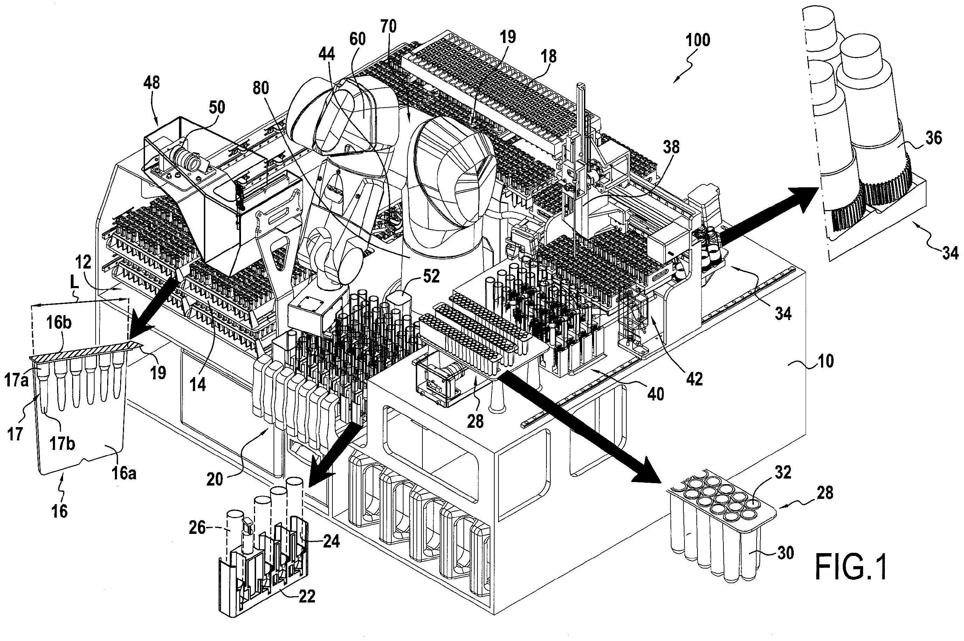

La figure 1 illustre un automate d'analyse médicale, adapté pour tester des échantillons sanguins.

Dans l'exemple, l'analyse réalisée à l'aide de cet automate vise à mettre en évidence une réaction entre des antigènes (substance capable de déclencher une réaction immunitaire) et des anticorps (protéine du sérum sanguin sécrétée par les globules blancs intervenant dans l'immunité en présence d'un antigène) par agglutination.

Cette analyse trouve son application notamment dans les tests de phénotypage de groupe sanguin, de recherche d'anticorps tels que des agglutinines irrégulières, et de détermination de la compatibilité entre un donneur et un receveur.

Elle peut être réalisée de deux manières. Soit elle est destinée à rechercher la présence ou l'absence d'antigènes à la surface d'hématies et dans ce cas on met en présence un sérum test de composition connue en anticorps, avec des hématies d'un patient à tester. Soit elle est destinée à rechercher la présence ou l'absence d'anticorps particuliers dans un échantillon donné et dans ce cas on met en présence l'échantillon à tester qui est généralement le sérum ou le plasma du patient, avec des hématies test.

Dans les deux cas, cependant, le principe sur lequel est basée l'analyse reste le même.

Une suspension d'hématies (test ou à tester) est prélevée dans un tube échantillon à l'aide d'une pipette. Cette suspension est éventuellement obtenue au préalable par l'introduction d'hématies dans un diluant tel que du sérum physiologique ou tout autre diluant adapté.

La suspension d'hématies est ensuite introduite dans un récipient, notamment un tube, contenant un gel. Dans l'exemple, la suspension est introduite dans un puits de carte gel, une carte gel étant typiquement une carte munie d'une pluralité de puits (généralement 6 ou 8) contenant un gel et initialement obturés par un opercule.

Une solution de réactif comprenant des anticorps, notamment, selon le cas, le plasma d'un patient ou un sérum test, est pipetée dans un flacon de réactif, puis introduite à son tour dans le puits de la carte gel.

Après avoir éventuellement été incubée, la carte gel est introduite dans une centrifugeuse et centrifugée.

La réaction est considérée comme positive lorsqu'une liaison spécifique se crée entre les anticorps du plasma ou sérum et les antigènes de surface des hématies, et qu'ils forment un agglutinat de particules.

Sous l'effet de la centrifugation, en l'absence d'agglutinat (i.e. en cas de réaction négative), les hématies passent à travers le gel contenu dans le puits de la carte gel et se concentrent au fond du puits.

En présence d'agglutinats (i.e. en cas de réaction positive), au contraire, les hématies restent à la surface du gel pendant la centrifugation.

Pour permettre à l'utilisateur de visualiser les résultats de réaction, la carte gel est amenée à une station de capture d'images, laquelle comprend ici une caméra reliée à une interface utilisateur, pour l'affichage des images des résultats de réaction. Dans l'exemple, l'interprétation des résultats de réaction est réalisée de manière automatique, notamment à l'aide d'un logiciel adapté.

Dans d'autres exemples, l'analyse des résultats est directement réalisée par l'opérateur qui les visualise soit à l'œil nu soit sur l'organe d'affichage de l'interface utilisateur. L'opérateur peut par exemple détecter l'absence ou la présence d'un culot coloré au fond du puits de carte, et en déduire la positivité ou la négativité de la réaction.

L'automate d'analyse médicale 100 illustré sur la figure 1 comprend un châssis 10 supportant, pour la réalisation des différentes opérations précitées, une pluralité d'organes de stockage et/ou d'analyse listés ci-dessous :
- un magasin 12 d'entrée et de sortie pour des paniers de cartes gel 14 supportant chacun une pluralité de cartes gel (par exemple douze) 16, pour des flacons de réactif 36 et pour des récipients à diluant 28, chaque récipient à diluant 28 comprenant ici une pièce injectée 30 munie d'une pluralité de cavités 32 operculées et remplies de diluant (dans l'exemple illustré, seuls des paniers de cartes gel apparaissent au niveau du magasin d'entrée ; les flacons de réactifs et les récipients à diluant sont cependant visibles en d'autres endroits de l'automate, décrits ci-après) ;
- un incubateur 18 ;
- une zone de préparation des ensembles (aussi appelés « batchs ») de cartes gel à pipeter 19 ;
- une zone de stockage de cartes gel réutilisables (non représentée), c'est-à-dire de cartes gel dont seuls certains puits ont été utilisés ;
- une zone de chargement/déchargement de supports de tubes échantillons 20, chaque support de tubes échantillons 22 étant muni de cavités cylindriques 24 adaptées à recevoir les tubes échantillons 26;
- une zone de pipetage 34 des flacons de réactif 36 ;
- un robot de pipetage 38, mobile ici selon trois degrés de liberté (dans l'exemple trois axes de translation orthogonaux, incluant l'axe vertical le long duquel se déplace l'aiguille de pipetage), entre une zone de pipetage 40 des tubes échantillons 26 et des récipients à diluant 28, une zone de pipetage 42 des cartes gel 16 et la zone de pipetage 34 des flacons de réactif 36 ;
- une centrifugeuse de carte gel 44 ;
- une station de capture d'images et de contrôle 48 (ci-après station de contrôle), comprenant une caméra 50 reliée à une interface utilisateur (non représentée) ; et
- un récipient ou poubelle de collecte 52 des objets tels que les cartes gel 16, tubes échantillons 22 et flacons réactifs 36, après usage (pour des raisons de clarté, sur la figure 1, le récipient de collecte 52 n'est pas représenté à l'échelle).

L'automate d'analyse comprend en outre un robot 70 situé sensiblement au centre de l'automate 100, entouré par l'ensemble des éléments précités, et muni d'un bras poly-articulé 60 décrit plus en détail ci-dessous.

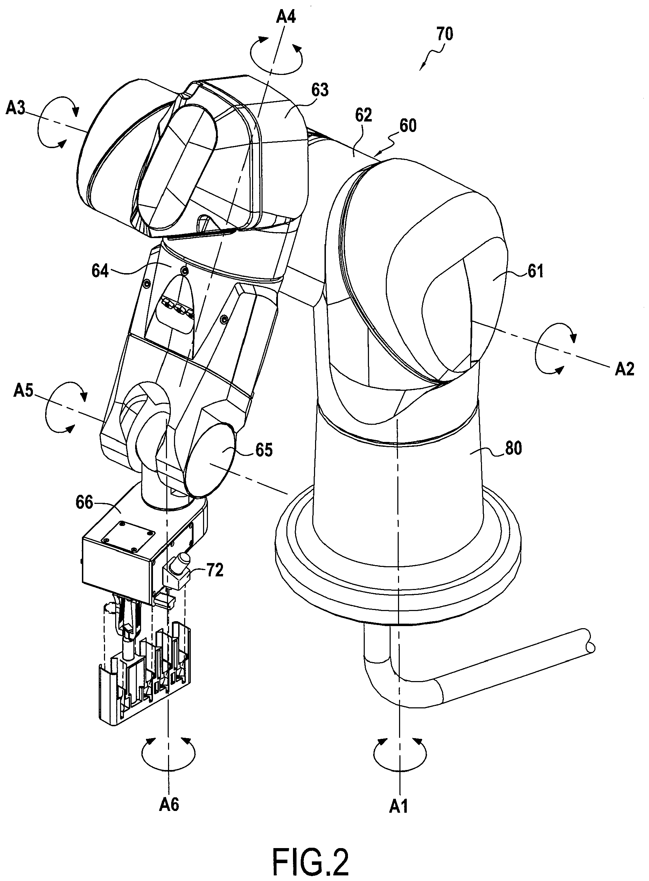

Dans l'exemple, illustré plus en détail sur la figure 2, le bras 60 du robot 70 comprend un premier segment de bras 61 s'étendant depuis un socle horizontal 80 fixé au châssis 10 de l'automate 100. Le premier segment de bras 61 est situé sensiblement au centre de l'automate 100, et monté pivotant par rapport au socle 80 autour d'un premier axe A1 sensiblement vertical.

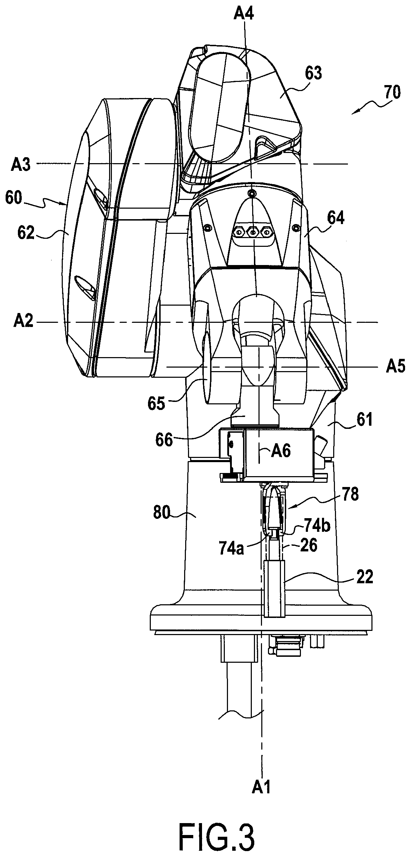

Un deuxième segment de bras 62 de l'automate, mieux visible sur la figure 3, est relié à l'extrémité du premier segment de bras 61 opposée au socle 80 de l'automate 100, et articulé par rapport au premier segment de bras autour d'un deuxième axe A2 perpendiculaire au premier axe A1.

Un troisième segment de bras 63 est relié à l'extrémité du deuxième segment de bras 62 opposée au premier segment de bras 61, et articulé par rapport au deuxième segment de bras 62 autour d'un troisième axe A3 parallèle à A2.

Un quatrième segment de bras 64 est relié au troisième segment de bras 63 en étant monté pivotant par rapport à celui-ci autour d'un quatrième axe A4 perpendiculaire au troisième axe A3.

Un cinquième segment de bras 65 est relié au quatrième segment de bras 64 en étant monté pivotant par rapport à celui-ci autour d'un cinquième axe A5 perpendiculaire au quatrième axe A4.

Enfin, le bras 60 est terminé par un sixième segment de bras ou organe terminal 66 relié à l'extrémité du cinquième bras 65 qui est opposée au quatrième bras 64. Le sixième bras 66 est monté pivotant par rapport au cinquième bras 65 autour d'un sixième axe A6 perpendiculaire au cinquième axe A5, et parallèle à A2 et A3.

Grâce aux six axes de rotation (ou articulations de type pivot) du bras 60, l'organe terminal 66 peut atteindre tous les postes de travail répartis à 360° autour de lui, à des hauteurs différentes et selon des orientations différentes.

On notera que, selon une variante de réalisation de l'invention, le robot poly-articulé peut comprendre plus de six axes de rotation.

Sur la figure 2, l'organe terminal 66 comporte un palpeur piézo-électrique 72.

Lors de la fabrication de l'automate ou d'opérations de maintenance, et grâce aux six axes de rotation du robot 70, le palpeur 72 vient palper les différents postes de travail et mémorise les coordonnées réelles dans l'espace de tous les éléments constituant l'automate 100. Le robot 70 connaît ainsi l'ensemble des positions et orientations des éléments et dispose d'une image fidèle de l'automate. Les défauts de géométrie dus aux imprécisions de construction, n'ont donc aucun impact sur le fonctionnement final de l'automate.

A son extrémité inférieure, l'organe terminal 66 comporte en outre deux mâchoires 74a, 74b sensiblement en forme de L, en regard l'une de l'autre, montées coulissantes le long de deux glissières 76a, 76b dirigées perpendiculairement à l'axe A6 précité et parallèles l'une à l'autre. Les mâchoires 74a, 74b forment un organe de saisie ou pince 78 qui s'ouvre lorsqu'elles se déplacent en s'éloignant l'une de l'autre et se referme lorsqu'elles se rapprochent l'une de l'autre.

De préférence, le procédé d'analyse selon l'invention comprend une étape au cours de laquelle le robot 70 déplace les différents objets (cartes gel 16, flacons réactifs 36, récipient à diluant 28, etc.) participant au déroulement du protocole analytique décrit ci-dessus entre les différents postes de travail de l'automate (station de contrôle, zones de chargement/déchargement, zone de pipetage, poubelle, etc.), à l'aide de sa pince 78.

De préférence, le procédé d'analyse selon l'invention comprend une étape au cours de laquelle le robot poly-articulé 70 saisit et agite un objet, par exemple un flacon de réactif 36, avec sa pince 78, pour remettre en suspension ou mélanger le liquide qui y est contenu.

De préférence, le procédé d'analyse selon l'invention comprend une étape au cours de laquelle le robot 70 retourne une carte gel 16 au niveau de la station de contrôle 48, en la faisant pivoter d'un angle de 180°, afin de permettre une prise de vue sur chaque face.

Le procédé d'analyse selon l'invention peut encore comprendre une étape au cours de laquelle le robot poly-articulé actionne un élément de l'automate d'analyse médicale, par exemple il déplace la trappe d'ouverture/fermeture de la centrifugeuse 44, déplace le magasin d'entrée et de sortie 12 afin de le rendre accessible ou inaccessible à l'utilisateur ou pour le rendre accessible à la prise de cartes gel 16 par le robot poly-articulé 70, ou encore déplace la bague de netteté de la caméra 50 de la station de contrôle 48 lors d'une opération d'ajustement de la netteté.

D'autres étapes pouvant intervenir dans le procédé d'analyse selon l'invention, sont décrites ci-dessous en liaison avec la figure 1.

Le procédé peut par exemple comprendre une étape au cours de laquelle le robot 70 déplace un support 22 de tubes échantillons 26, remplis d'hématies d'un patient, ou d'une suspension de telles hématies, vers la station de contrôle 48 pour détecter la présence des tubes 26, détecter la présence de bouchons sur les tubes 26, mesurer le diamètre et la hauteur des tubes 26, déterminer la forme du fond des tubes 26, ou encore lire l'identificateur des tubes 26, par exemple un code barre.

Le procédé peut aussi comprendre une étape au cours de laquelle le robot 70 transporte le support de tubes 22 de la station de contrôle 48 vers la zone de chargement/déchargement 20 pour permettre à l'utilisateur de corriger une anomalie détectée sur un ou plusieurs tubes 26 ou vers la zone de pipetage des tubes échantillons 40.

Si nécessaire, après l'opération de pipetage, le procédé peut également comprendre une étape au cours de laquelle le robot 70 déplace le support de tubes échantillons 22 une nouvelle fois jusqu'à là station de contrôle 48 pour une ré-identification des tubes 26.

Le procédé peut également comprendre une étape au cours de laquelle le robot 70 transporte le support de tubes 22 directement de la zone de pipetage 40 vers la zone de chargement/déchargement 20 pour remettre à disposition de l'utilisateur les tubes échantillons 26 traités.

Lorsque les hématies contenues dans les tubes échantillon 26 ont besoin d'être mises en suspension dans un diluant, le procédé peut comprendre une étape au cours de laquelle le robot 70 transporte un récipient à diluant 28 placé initialement par l'utilisateur dans le magasin d'entrée 12, vers la station de contrôle 48 pour lire son identificateur. Puis il peut le transporter vers la zone de pipetage 40, ou, le cas échéant, le retourner vers le magasin 12 pour permettre à l'utilisateur de corriger une anomalie (lorsque, par exemple, le récipient 28 est périmé).

Le procédé peut en outre comprendre, après l'opération de pipetage, une étape au cours de laquelle le robot 70 déplace le récipient à diluant 28 vers le magasin 12 pour le remettre à disposition de l'utilisateur, vers la poubelle de collecte 52 pour l'éliminer; ou encore vers la station de contrôle 48 pour le ré-identifier si nécessaire.

Le procédé d'analyse selon l'invention peut également comprendre une étape au cours de laquelle le robot 70 transporte un flacon réactif 36, qui contient par exemple selon le cas, le plasma test ou un sérum test.

Le flacon réactif 36 peut par exemple être déplacé vers la station de contrôle 48 pour détecter la présence du flacon 36 ou d'un bouchon sur le flacon, mesurer la hauteur du flacon 36, ou encore lire son identificateur. Le flacon 36 peut également être déplacé vers la zone de pipetage ou vers le magasin d'entrée et sortie 12 pour permettre à l'utilisateur de corriger une anomalie détectée sur un flacon 36 (par exemple lorsqu'un flacon n'est pas débouché). De la zone de pipetage, il peut être déplacé vers la poubelle de collecte 52 pour être éliminé s'il est vide ou vers la station de contrôle 48 pour être ré-identifié, dans le cas contraire.

Le procédé d'analyse selon l'invention peut en outre comprendre une étape au cours de laquelle le robot 70 transporte une carte gel 16 contenue initialement dans l'un des paniers 14 chargés en magasin d'entrée 12.

La carte gel 16 comprend un corps 16a, notamment en plastique, s'étendant selon une direction longitudinale L, et dans lequel sont formés des puits 17 réactionnels, par exemple six puits. Ces puits 17 présentent des ouvertures débouchant dans une paroi supérieure 16b de ladite carte gel 16, lesdites ouvertures étant initialement obturées par un opercule 19 s'étendant selon la direction longitudinale L. Dans l'exemple, l'opercule 19 est une bande mince scellée à la paroi supérieure 16b de la carte gel 16.

Chaque puits 17 de la carte gel 16 contient par ailleurs un gel servant à l'interprétation des résultats intervenus dans le puits.

Dans l'exemple illustré, chaque puits 17 est formé d'une cavité supérieure 17a de forme sensiblement cylindrique reliée à une cavité inférieure 17b de forme également sensiblement cylindrique par l'intermédiaire d'une cavité intermédiaire tronconique. La cavité supérieure 17a présente un diamètre sensiblement supérieur à celui de la cavité inférieure 17b, les cavités inférieure et supérieure étant coaxiales.

Dans un premier temps, la carte gel 16 peut être déplacée vers la station de contrôle 48 pour lire son identificateur ou détecter l'état du gel.

Elle peut également être transportée de la station de contrôle 48 jusqu'au magasin 12 ou jusqu'à la poubelle de collecte 52, par exemple lorsque la carte 16 a été identifiée comme étant périmée.

La carte gel 16 peut être déplacée vers la zone de pipetage de carte gel 42. Elle peut également être déplacée de la zone de pipetage 42 vers la station de contrôle 48 pour contrôler le niveau total du liquide dispensé, de la station de contrôle 48 vers l'incubateur 18, de l'incubateur 18 vers la station de contrôle 48, de la station de contrôle 48 vers la centrifugeuse 44 pour la centrifuger, de la centrifugeuse 44 vers la station de contrôle 48 pour réaliser une capture d'une image de la carte 16, de la station de contrôle 48 vers le magasin interne (non représenté) pour stocker les cartes à relire manuellement, du magasin interne (non représenté) vers le magasin de sortie de cartes gel 18 pour remettre à disposition de l'utilisateur les cartes 16 à relire manuellement, de la station de contrôle 48 vers une zone de cartes réutilisables pour constituer un stock de cartes réutilisables pour des analyses à venir ne nécessitant pas une carte gel complète, de la zone cartes réutilisables vers la zone de préparation des blocs de préparation de cartes gel pour constituer les batchs de cartes gel à pipeter, de la zone cartes réutilisables vers la centrifugeuse pour équilibrer une centrifugeuse avant son lancement, de la zone cartes réutilisables vers la poubelle de collecte 52 pour éliminer des cartes 16 périmées ou libérer des places en zone cartes réutilisables.

Le procédé d'analyse selon l'invention peut également comprendre une étape au cours de laquelle le robot 70 transporte les paniers vides 14 initialement chargées de cartes gel 16, du magasin d'entrée 12 vers la poubelle de collecte 52 pour éliminer les paniers vides 14 non utilisables dans le magasin de sortie 12.

## Revendications

1. Procédé d'analyse médicale utilisant un automate d'analyse médicale muni d'un robot poly-articulé (70) comprenant des articulations définissant au moins six axes de rotation (A1, A2, A3, A4, A5, A6) et adapté pour déplacer et/ou orienter un organe terminal (66) suivant six degrés de liberté, l'organe terminal portant un organe de saisie (78) adapté pour saisir un récipient (16), ledit procédé d'analyse médicale comprenant au moins la succession d'étapes suivantes :
- on extrait un échantillon à traiter issu d'un être humain ou d'un animal d'un réceptacle de stockage, et on l'introduit dans un récipient (16) à l'aide du robot poly-articulé (70),
- on transfère ledit récipient (16) vers au moins une station de traitement de l'automate d'analyse médicale (100) au moyen du robot poly-articulé (70),
- on traite l'échantillon dans la station de traitement,
- on transfère le récipient (16) vers une station de capture d'images et on affiche les résultats de traitement sur une interface utilisateur.

2. Procédé d'analyse médicale selon la revendication 1, dans lequel l'étape de traitement de l'échantillon comprend l'introduction dans le récipient d'un réactif adapté à réagir avec l'échantillon à traiter.

3. Procédé d'analyse médicale selon l'une quelconque des revendications 1 ou 2, comprenant en outre une étape d'analyse, notamment automatique, des résultats de traitement.

4. Procédé selon l'une quelconque des revendications 1 à 3, dans lequel le robot poly-articulé (70) est arrimé à un socle fixe (80) et comprend exclusivement des articulations rotoïdes.

5. Procédé d'analyse selon l'une quelconque des revendications 1 à 4, dans lequel l'analyse médicale réalisée appartient à l'un quelconque des domaines parmi l'immuno-hématologie, la virologie, la microbiologie, la bactériologie, la mycologie, la parasitologie, le contrôle de qualité pour le laboratoire de diagnostic in vitro, la détection des maladies auto-immunes, la surveillance du diabète, la détection de maladies génétiques, la toxicologie et la surveillance d'un état physiologique ou pathologique notamment suite à un traitement thérapeutique.

6. Procédé selon l'une quelconque des revendications 1 à 5, dans lequel l'échantillon à traiter comprend l'une des substances parmi un fluide, une cellule, un tissu biologique ou d'organe issu d'un être humain ou d'un animal.

7. Procédé selon l'une quelconque des revendications 1 à 6, dans lequel le récipient (16) est une carte-gel comportant un corps (16a) dans lequel sont formés plusieurs puits réactionnels (17) adjacents disposés selon une rangée unique, les puits (17) contenant un gel et étant initialement obturés par un opercule (19).

8. Procédé selon l'une quelconque des revendications 1 à 7, dans lequel on amène le récipient (16) jusqu'à la station de capture d'images des résultats de traitement au moyen du robot poly-articulé (70).

9. Procédé selon l'une quelconque des revendications 1 à 8, au cours de l'étape de transfert, on amène le récipient à l'aide du robot poly-articulé (70) jusqu'à une station de contrôle reliée à l'interface utilisateur.

10. Procédé selon la revendication 9, dans lequel la station de capture d'images des résultats de traitement et la station de contrôle sont une seule et même station.

11. Procédé d'analyse médicale selon l'une quelconque des revendications 1 à 10, dans lequel :
- on amène le récipient préalablement rempli de l'échantillon à traiter à l'aide du robot poly-articulé (70) vers une zone de pipetage (42) dudit récipient (16) pour y introduire un réactif,
- on introduit le réactif dans le récipient (16),
- on amène le récipient (16) à l'aide du robot poly-articulé (70) vers un incubateur (18),
- on incube le récipient (16),
- on amène le récipient (16) à l'aide du robot poly-articulé (70) de l'incubateur (18) vers une centrifugeuse (44),
- on centrifuge le récipient (16),
- on transfère le récipient vers la station de capture d'images et on affiche les résultats de traitement sur l'interface utilisateur.

12. Procédé selon la revendication 11, dans lequel, avant l'étape d'introduction du réactif dans le récipient (16), on retourne et/ou agite le flacon de réactif (36) à l'aide du robot poly-articulé (70), ce par quoi le réactif est remis en suspension.

13. Procédé d'analyse selon les revendications 11 ou 12, dans lequel avant l'étape de centrifugation, on amène le récipient (16) à l'aide du robot poly-articulé (70) jusqu'à une station de contrôle (48) où le récipient (16) est visionné pour vérifier les air-gap.

14. Procédé selon l'une quelconque des revendications 1 à 13, dans lequel on amène le récipient (16) à l'aide du robot poly-articulé (70) jusqu'à un récipient de collecte (52) destiné à la récupération des déchets.

15. Procédé selon l'une quelconque des revendications 1 à 14, comprenant une étape de paramétrage préalable au cours de laquelle des zones où le robot poly-articulé (70) est autorisé à se déplacer et des zones où le robot ne peut pénétrer sont prédéfinies, notamment afin d'interdire le survol de certaines zones de l'automate d'analyse médicale (100).

16. Procédé selon l'une quelconque des revendications 1 à 15, dans lequel l'automate comprend une pluralité de stations de traitement qui sont réparties à 360° autour du robot poly-articulé (70).

## Patentansprüche

1. Verfahren zur medizinischen Analyse unter Verwendung eines medizinischen Analyseautomaten mit einem polygelenkigen Roboter (70), der Gelenke umfasst, die mindestens sechs Rotationsachsen (A1, A2, A3, A4, A5, A6) definieren und dazu ausgelegt ist, ein Endglied (66) in sechs Freiheitsgraden zu verschieben und/oder auszurichten, wobei das Endglied ein Greifglied (78) trägt, das dazu ausgelegt ist, eine Aufnahme (16) zu ergreifen, wobei das Verfahren zur medizinischen Analyse zumindest die Abfolge der folgenden Schritte umfasst:
- Extrahieren einer zu behandelnden Probe, die von einem Menschen oder einem Tier stammt, aus einem Aufbewahrungsbehälter und Einführen derselben in eine Aufnahme (16) mit Hilfe des polygelenkigen Roboters (70),
- Übertragen der Aufnahme (16) zu mindestens einer Behandlungsstation des medizinischen Analyseautomaten (100) mittels des polygelenkigen Roboters (70),
- Behandeln der Probe in der Behandlungsstation und
- Übertragen der Aufnahme (16) zu einer Bildaufnahmestation und Anzeigen der Behandlungsergebnisse an einer Benutzerschnittstelle.

2. Verfahren zur medizinischen Analyse nach Anspruch 1, wobei der Schritt der Behandlung der Probe das Einführen eines Reagens, das dazu ausgelegt ist, mit der zu behandelnden Probe zu reagieren, in die Aufnahme umfasst.

3. Verfahren zur medizinischen Analyse nach einem der Ansprüche 1 oder 2, ferner umfassend einen Schritt der Analyse, insbesondere automatisch, der Behandlungsergebnisse.

4. Verfahren nach einem der Ansprüche 1 bis 3, wobei der polygelenkige Roboter (70) auf einem festen Sockel (80) befestigt ist und ausschließlich Drehgelenke umfasst.

5. Verfahren zur Analyse nach einem der Ansprüche 1 bis 4, wobei die durchgeführte medizinische Analyse einen beliebigen der Bereiche ausgewählt aus der Immunhämatologie, der Virologie, der Mikrobiologie, der Bakteriologie, der Mykologie, der Parasitologie, der Qualitätskontrolle für In-vitro-Diagnoselabors, der Erkennung von Autoimmunerkrankungen, der Diabetesüberwachung, der Erkennung von genetischen Erkrankungen, der Toxikologie und der Überwachung eines physiologischen oder pathologischen Zustands insbesondere im Anschluss an eine therapeutische Behandlung betrifft.

6. Verfahren nach einem der Ansprüche 1 bis 5, wobei die zu behandelnde Probe eine der Substanzen ausgewählt aus einem Fluid, einer Zelle, einem biologischen Gewebe oder einem Organ, das/die von einem Menschen oder einem Tier stammt, umfasst.

7. Verfahren nach einem der Ansprüche 1 bis 6, wobei die Aufnahme (16) eine Gelkarte ist, die einen Körper (16a) umfasst, in dem mehrere benachbarte Reaktionsvertiefungen (17) gebildet sind, die in einer einzelnen Reihe angeordnet sind, wobei die Vertiefungen (17) ein Gel enthalten und zunächst durch einen Deckel (19) verschlossen sind.

8. Verfahren nach einem der Ansprüche 1 bis 7, wobei die Aufnahme (16) mittels des polygelenkigen Roboters (70) bis zu der Bildaufnahmestation der Behandlungsergebnisse geführt wird.

9. Verfahren nach einem der Ansprüche 1 bis 8, wobei bei dem Übertragungsschritt die Aufnahme mit Hilfe des polygelenkigen Roboters (70) bis zu einer Kontrollstation geführt wird, die mit der Benutzerschnittstelle verbunden ist.

10. Verfahren nach Anspruch 9, wobei die Bildaufnahmestation der Behandlungsergebnisse und die Kontrollstation ein und dieselbe Station sind.

11. Verfahren zur medizinischen Analyse nach einem der Ansprüche 1 bis 10, wobei:
- die Aufnahme, die zuvor mit Hilfe des polygelenkigen Roboters (70) mit der zu behandelnden Probe gefüllt wurde, zu einem Pipettierbereich (42) der Aufnahme (16) geführt wird, um dort ein Reagens einzuführen,
- das Reagens in die Aufnahme (16) eingeführt wird,
- die Aufnahme (16) mit Hilfe des polygelenkigen Roboters (70) zu einem Inkubator (18) geführt wird,
- die Aufnahme (16) inkubiert wird,
- die Aufnahme (16) mit Hilfe des polygelenkigen Roboters (70) aus dem Inkubator (18) zu einer Zentrifuge (44) geführt wird,
- die Aufnahme (16) zentrifugiert wird und
- die Aufnahme zu der Bildaufnahmestation übertragen wird und die Behandlungsergebnisse an der Benutzerschnittstelle angezeigt werden.

12. Verfahren nach Anspruch 11, wobei vor dem Schritt der Einführung des Reagens in die Aufnahme (16) die Reagensflasche (36) mit Hilfe des polygelenkigen Roboters (70) umgedreht und/oder geschüttelt wird, wodurch das Reagens wieder suspendiert wird.

13. Verfahren zur Analyse nach Anspruch 11 oder 12, wobei vor dem Schritt der Zentrifugation die Aufnahme (16) mit Hilfe des polygelenkigen Roboters (70) bis zu einer Kontrollstation (48) geführt wird, an der die Aufnahme (16) angesehen wird, um die Luftspalte zu prüfen.

14. Verfahren nach einem der Ansprüche 1 bis 13, wobei die Aufnahme (16) mit Hilfe des polygelenkigen Roboters (70) bis zu einer Sammelaufnahme (52) geführt wird, die zur Abfallverwertung gedacht ist.

15. Verfahren nach einem der Ansprüche 1 bis 14, umfassend einen Schritt der vorherigen Einstellung, bei der die Bereiche, in denen sich der polygelenkige Roboter (70) verschieben kann und die Bereiche, in die der Roboter nicht eindringen kann, vordefiniert werden, insbesondere, um den Überflug bestimmter Bereiche des medizinischen Analyseautomaten (100) zu untersagen.

16. Verfahren nach einem der Ansprüche 1 bis 15, wobei der Automat mehrere Behandlungsstationen umfasst, die um 360° um den polygelenkigen Roboter (70) herum verteilt sind.

## Claims

1. A medical analysis method using a medical analysis machine provided with a poly-articulated robot (70) comprising joints defining at least six axes of rotation (A1, A2, A3, A4, A5, A6) and adapted for displacing and/or orienting a terminal member (66) according to six degrees of freedom, the terminal member bearing a grasping member (78) adapted for grasping a container (16), said medical analysis method comprising at least the succession of the following steps:
- a sample to be treated stemming from a human being or an animal is extracted from a storage receptacle and introduced into the container by means of the poly-articulated robot (70),
- said container (16) is transferred to at least one treatment station of the medical analysis machine (100) by means of the poly-articulated robot (70),
- the sample is treated in the treatment station,
- the container (16) is transferred to a station for capturing images and the results of the treatment are displayed on a user interface.

2. The medical analysis method according to claim 1, wherein the step for treating the sample comprises the introduction into the container of a reagent adapted to react with the sample to be treated.

3. The medical analysis method according to any one of claims 1 or 2, further comprising an analysis step, notably an automatic analysis step, for the treatment results.

4. The method according to any one of claims 1 to 3, wherein the poly-articulated robot (70) is secured to a fixed base (80) and exclusively comprises rotoidal joints.

5. The analysis method according to any one of claims 1 to 4, wherein the medical analysis performed belongs to any of the fields from among immuno-hematology, virology, microbiology, bacteriology, mycology, parasitology, quality control for an *in vitro* diagnostic laboratory, detection of auto-immune diseases, monitoring diabetes, detecting genetic diseases, toxicology and the monitoring of a physiological or pathological condition, notably subsequent to therapeutic treatment.

6. The method according to any one of claims 1 to 5, wherein the sample to be treated comprises one of the substances from among a fluid, a cell, a biological tissue or an organ tissue from a human being or an animal.

7. The method according to any one of claims 1 to 6, wherein the container (16) is a gel card including a body (16a) in which are formed several adjacent reaction wells (17) positioned along a single row, the wells (17) containing a gel and being initially obturated with a lid (19).

8. The method according to any one of claims 1 to 7, wherein the container (16) is brought to the station for capturing images of the treatment results by means of the poly-articulated robot (70).

9. The method according to any one of claims 1 to 8, during the transfer step, the container is brought by means of the poly-articulated robot (70) to a control station connected to a user interface.

10. The method according to claim 9, wherein the station for capturing images of the treatment results and the control station are a single and same station.

11. The medical analysis method according to any one of claims 1 to 10, wherein:
- the container filled beforehand with the sample to be treated by means of the poly-articulated robot (70) is brought to an area (42) for pipetting said container (16) in order to introduce a reagent therein,
- the reagent is introduced into the container (16),
- the container (16) is brought to an incubator (18) by means of the poly-articulated robot (70),
- the container (16) is incubated,
- the container (16) is brought by means of the poly-articulated robot (70) from the incubator (18) to a centrifuge (44) ,
- the container (16) is centrifuged,
- the container is transferred to the station for capturing images and the treatment results are displayed on the user interface.

12. The method according to claim 11, wherein, before the step of introducing the reagent into the container (16), the reagent flask (36) is turned upside down and/or shaken by means of the poly-articulated robot (70), the reagent being thereby resuspended.

13. The analysis method according to claims 11 or 12, wherein before the centrifugation step, the container (16) is brought, by means of the poly-articulated robot (70), to a control station (48) where the container (16) is viewed in order to check the air gaps.

14. The method according to any one of claims 1 to 13, wherein the container (16) is brought, by means of the poly-articulated robot (70), to a collecting container (52) intended for recovering the waste.

15. The method according to any one of claims 1 to 14, comprising a prior parameterization step during which areas where the poly-articulated robot (70) is allowed to move and areas where the robot cannot penetrate are pre-defined, notably in order to prevent flying over certain areas of the medical analysis machine (100).

16. The method according to any one of claims 1 to 15, wherein the machine comprises a plurality of treatment stations which are distributed over 360° around the poly-articulated robot (70)
